# EUROPÄISCHE PATENTSCHRIFT

(11) **EP 0 468 178 B1**
(45) Veröffentlichungstag und Bekanntmachung des Hinweises auf die Patenterteilung: **18.05.1994**
(21) Anmeldenummer: 91109434.0
(22) Anmeldetag: 08.06.1991
(51) Int. Cl.: B41F 13/00, F16H 55/18

(54) **Zahnrad für den Antrieb der Zylinder von Offsetdruckmaschinen**
Gearwheel for the drive of the cylinders of offset printing machines
Pignon pour l'entraînement des cylindres des machines à imprimer offset

(30) Priorität: 24.07.1990 DE 4023479
(43) Veröffentlichungstag der Anmeldung: 29.01.1992
(73) Patentinhaber: MAN Roland Druckmaschinen AG, 63012 Offenbach (DE)
(72) Erfinder: Mathes, Josef, W-6050 Offenbach/Main (DE); Höll, Roland, W-6108 Weiterstadt (DE); Rebel, Herbert, W-6054 Rodgau 3 (DE)
(74) Vertreter: Marek, Joachim, Dipl.-Ing.

(56) Entgegenhaltungen:
- DE-A- 1 650 784

## Beschreibung

Die Erfindung betrifft Zahnräder für den Antrieb der Zylinder von Offsetdruckmaschinen, die Verspanneinrichtungen zum Deformieren des Zahnkranzes der Zahnräder aufweisen.

Durch die DE-AS 1 650 784 sind bereits Verspanneinrichtungen zum Deformieren des Zahnkranzes der Zahnräder für den Antrieb der Zylinder von Offsetdruckmaschinen bekannt, die zusätzlich im Radkörper eines oder mehrerer Zahnräder untergebracht werden. Bei dieser Lösungsvariante wird das Zahnrad an einer Stelle oder an zwei Stellen partiell verformt. Diese Verspannvorrichtungen üben eine Verspann- oder Verstellkraft in radialer Richtung aus, wobei die Spannvorrichtung als axial verstellbarer Keil oder auch als eine radial verstellbare Spannschraube ausgebildet werden kann. Selbst bei einer relativ groß ausgelegten Bohrung werden durch die Spannvorrichtung nur wenige Zähne des Zahnrades angehoben, so daß stoßartige Kräfte auftreten, weil nur eine örtliche Verformung an einer Stelle erfolgt.

Des weiteren ist aus der DE-PS 2 829 026 ein Antrieb bekannt geworden, dessen schrägverzahnte Stirnzahnräder koaxial zu jedem Stirnzahnrad eine Spannscheibe aufweisen, an der zwei oder mehr in axialer Richtung auf den Zahnkranz des Zahnrades einwirkende Spannvorrichtungen angebracht sind. Durch eine elastische Verformung des schrägverzahnten Zahnkranzes in axialer Richtung ergibt sich ein zur Spieleinstellung genutzter Verstellweg in Umfangsrichtung, wobei gegebenenfalls die Verzahnung beim Verspannen verkippt werden kann.

Aufgabe der Erfindung ist es, Verspannvorrichtungen zur Deformation des Zahnkranzes eines Zahnrades für den Antrieb der Zylinder von Offsetdruckmaschinen zu schaffen, die auf konstruktiv einfache Weise eine partielle Vergrößerung des Durchmessers des Teilkreises des Zahnrades ermöglicht, welche sanft ansteigend parabelförmig verläuft, so daß das verformte Zahnrad stoßfrei abrollt.

Gelöst wird diese Aufgabe mit den Maßnahmen des Patentanspruches 1.

Mit der Erfindung wird in dem angegebenen Anwendungsfall eine Beseitigung von Zahnspiel und/oder Rundlauffehlern erreicht, in dem der Zahnkranz mittels axial unterschiedlich vorgespannter radial auf den Zahnkranz einwirkender Kegelbolzen im Tausendstel- bis Hundertstel-mm-Bereich deformiert wird, bis einwandfreie Passerdrucke ausgeführt werden können. In Verbindung mit durch Zusatzbohrungen gebildeten Dehnstegen wird eine Vergrößerung des Durchmessers des Teilkreises des Zahnrades erreicht, die sanft ansteigend parabelförmig verläuft.

Vorteilhafte Ausgestaltungen der Erfindung sind in den Unteransprüchen angegeben.

Die Weiterbildung nach Anspruch 2 und 3 ermöglicht wegen der Verwendung einer Vielzahl abgeflachter axial vorspannbarer Kegelstifte eine weitergehende Deformation des Radkranzes.

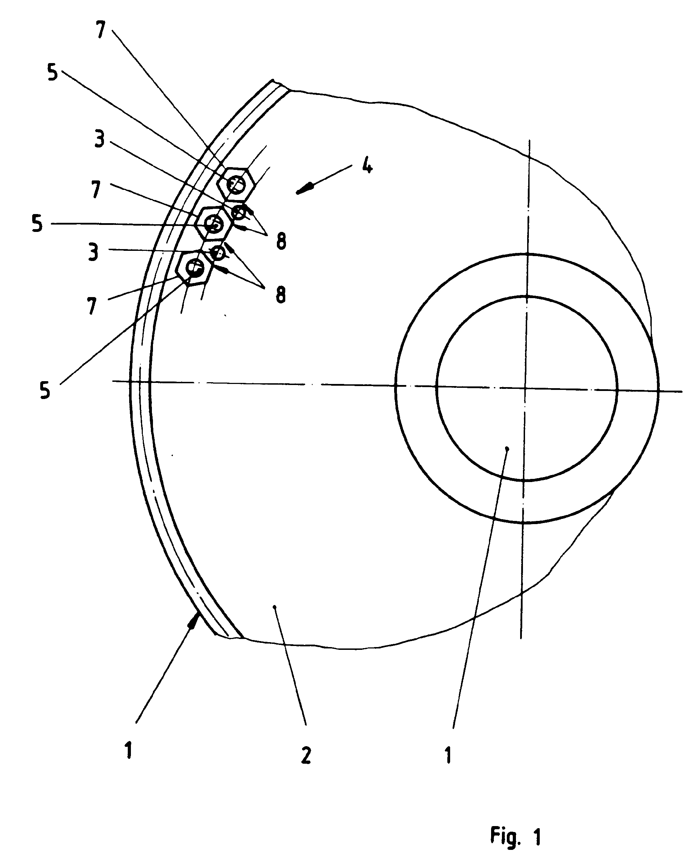

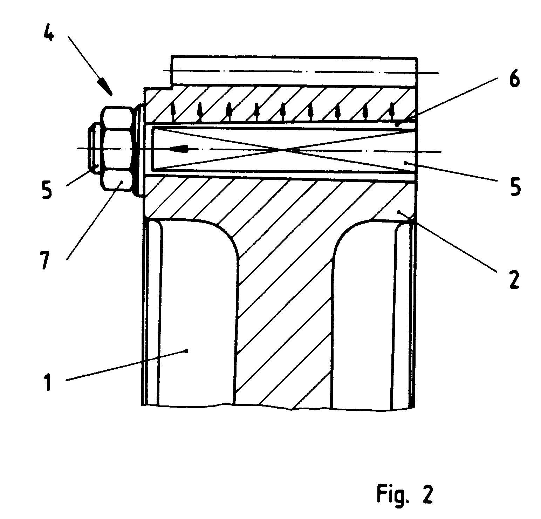

Ein Ausführungsbeispiel der Erfindung wird anhand der Figuren 1 und 2 erläutert.
Es zeigen:
- Fig. 1: eine Teildraufsicht auf ein erfindungsgemäß gestaltetes Zahnrad,
- Fig. 2: einen Radialschnitt durch den Zahnkranz des Zahnrades nach Fig. 1.

Weist eines der Zahnräder 1 für den Antrieb der Zylinder von Offsetdruckmaschinen einen Fehler auf, so wird dem Räderzug ein unsynchroner Lauf aufgezwungen. Zur Behebung dieses Drehfehlers muß mindestens ein erfindungsgemäß ausgebildetes Zahnrad 1 im Räderzug vorgesehen werden.

Für die Synchronisation der Rotation der Zylinder der Offsetdruckmaschine besitzt der Zahnkranz 2 mindestens dieses einen Zahnrades 1 gemäß Fig. 1 als Spannvorrichtung 4 axial drei Kegelbohrungen 6, die mit axial vorspannbaren und radial auf den Zahnkranz 2 einwirkenden Kegelbolzen 5 versehen sind, zwischen denen zwei Zusatzbohrungen 3 vorgesehen sind, die axial durch den Zahnkranz geführt sind, so daß im Zahnkranz 2 in diesem Bereich verformbare Dehnstege 8 verbleiben. Die axial vorspannbaren Kegelbolzen 5 deformieren in Verbindung mit den Dehnstegen den Zahnkranz 2 in einer Größenordnung von Tausendstel- bis Hundertstel-mm, je nachdem wie stark, d.h. mit welchem Drehmoment sie angezogen werden, solange, bis mit der Offsetdruckmaschine einwandfreie Passerdrucke ausgeführt werden können. Die Verformung verläuft in radialer Richtung unter Ausbildung eines Teilkreises, der in diesem Bereich sanft ansteigend parabelförmig verläuft. Sollen größere Bereiche oder der Zahnkranz am gesamten Umfang deformiert werden, müssen entsprechend mehr, d.h. eine Vielzahn Kegelbolzen 5 und Zusatzbohrungen 3 vorgesehen werden.

Jeder dieser Kegelbolzen 5 weist an einem Ende ein Gewinde auf, das seitlich aus dem Zahnkranz 2 herausgeführt ist, auf das eine Mutter 7 aufgeschraubt ist. Die Mutter 7 stützt sich im gespannten Zustand direkt oder über in der Zeichnung nicht dargestellte Scheiben, Sicherungsringe oder dgl. seitlich am Zahnkranz 2 ab.

Vorzugsweise ist jeder Kegelbolzen 5 abgeflacht, so daß der Kraftangriff in der Kegelbohrung je nach Lage der verbleibenden kegeligen Segmente geändert werden kann, mit der Folge, daß sich die Deformationsrichtungen ändern.

Die vorzugsweise drei Kegelbolzen 5 laufen somit mit dem Zahnrad 1 um und deformieren auf diese Weise dessen Zahnkranz 2 je nach Einstellung in Verbindung mit den Dehnstegen 8 im Tausendstel- bis Hundertstel-mm-Bereich mehr oder weniger unterschiedlich in Größe und ggf. Richtung zu einem vergrößerten Teilkreisdurchmesser, der einigermaßen rund bleibt und somit stoßfrei arbeitet.

### Bezugzeichenliste

- 1: Zahnrad
- 2: Zahnkranz
- 3: Zusatzbohrung
- 4: Spannvorrichtung
- 5: Kegelbolzen
- 6: Kegelbohrung
- 7: Mutter
- 8: Dehnsteg

## Patentansprüche

1. Zahnrad (1) für den Antrieb der Zylinder von Offsetdruckmaschinen, mit einem Zahnkranz (2), der zur Synchronisation der Rotation der Zylinder axial drei Kegelbohrungen (6) aufweist, in die axial vorspannnbare und radial auf den Zahnkranz (2) einwirkende Kegelbolzen (5) einpreßbar sind, zwischen denen Zusatzbohrungen (3) vorgesehen sind, die zur Bildung von
Dehnstegen (8) im Zahnkranz (2) axial durch den Zahnkranz (2) geführt sind, so daß die mit dem Zahnrad (1) umlaufenden Kegelbolzen (5) dessen Zahnkranz (2) je nach Einstellung in Verbindung mit den Dehnstegen (8) mehr oder weniger deformieren.

2. Zahnrad nach Anspruch 1, mit einer Vielzahl am Umfang in axialer Richtung auf den Zahnkranz (2) einwirkender Kegelbolzen (5).

3. Zahnrad (1) nach Anspruch 1 und 2, mit Kegelbolzen (5), die abgeflacht sind.

## Claims

1. Gear wheel (1) for the drive of the cylinders of offset printing presses with a tooth ring (2) which for synchronisation of the rotation of the cylinder has axially three tapered bores (6) in which can be pushed axially pre-tensionable tapered pins (5) acting radially on the tooth ring (2), between which additional bores (3) are provided which are guided axially through the tooth ring (2) with the object of forming extension bars (8) in the tooth ring (2), so that the tapered pins (5) going round with the toothed gear (1) deform its tooth ring (2) more or less depending upon the adjustment in connection with the extension bars (8).

2. Gear wheel according to Claim 1 with a plurality of tapered pins (5) acting around the periphery in the axial direction on the tooth ring (2).

3. Gear wheel (1) according to Claim 1 and 2 with tapered pins (5) which are flattened off.

## Revendications

1. Roue dentée (1) pour l'entraînement des cylindres de machines d'impression offset, comportant une couronne dentée (2) qui, pour la synchronisation de la rotation des cylindres, présente axialement trois perçages coniques (6), dans lesquels peuvent être pressés des boulons coniques (5) pouvant être axialement précontraints et agissant radialement sur la couronne dentée (2), boulons entre lesquels sont prévus des perçages supplémentaires (3) qui, pour former des barrettes de dilatation (8) dans la couronne dentée (2), sont prévus axialement à travers la couronne dentée (2), de sorte que les boulons coniques (5) tournant avec la roue dentée (1) déforment plus ou moins sa couronne dentée (2), selon le réglage, en liaison avec les barrettes de dilatation (8).

2. Roue dentée selon la revendication 1, comportant une pluralité de boulons coniques (5) agissant sur la couronne dentée (2), à la périphérie, en direction axiale.

3. Roue dentée (1) selon les revendications 1 et 2, comportant des boulons coniques (5) qui sont aplanis.
